Europäisches Patentamt

European Patent Office

Office européen des brevets

(19)

(11) Publication number: **0 077 152**
**A1**

(12) # EUROPEAN PATENT APPLICATION

(21) Application number: **82305216.2**

(22) Date of filing: **30.09.82**

(51) Int. Cl.³: **G 02 F 1/133**

(30) Priority: **14.10.81 US 311691**

(43) Date of publication of application: **20.04.83**
**Bulletin 83/16**

(84) Designated Contracting States: **DE FR GB**

(71) Applicant: **EATON CORPORATION, 100 Erieview Plaza, Cleveland Ohio 44114 (US)**

(72) Inventor: **Richardson, Kenneth Joe, 1643 Barlow Road, Hudson, Ohio 44236 (US)**

(74) Representative: **Douglas, John Andrew, Eaton House Staines Road, Hounslow Middlesex TW4 5DX (GB)**

(54) **Electro-optical display having graphical support members.**

(57) Disclosed are electro-optical displays (13) having improved optical uniformity arising from improved parallelism between the plates (1, 2) of the displays provided by a plurality of graphically shaped support members (8) disposed in the cavity (4) between the display plates containing the electro-optical material. The graphically shaped support members are adapted in combination to provide information to a viewer of the display regardless of whether the electro-optical material is in an electrically energized or electrically un-energized state and may be used in conjunction with prior-art type support members that have not heretofore conveyed information to a viewer of such displays.

EP 0 077 152 A1

- 1 -

## ELECTRO-OPTICAL DISPLAY HAVING
## GRAPHICAL SUPPORT MEMBERS

### INTRODUCTION

This invention relates generally to an electro-optical display having an electro-optical material contained in a cavity between two plates that are bonded together by means of an hermetic sealant in which the ability of the electro-optical material to transmit an image to a viewer of the display is dependent upon whether the material is in an electrically energized or an electrically un-energized state and more particularly to such display that includes a plurality of graphically shaped support members disposed within the display cavity that, in conjunction with the sealant, preferably aid in bonding the plates together in addition to providing support and improving parallelism between the plates while additionally providing one or more graphical images that remain viewable and in combination convey information to a viewer of the display regardless of whether the electro-optical material is in an electrically energized or electrically un-energized state.

### BACKGROUND OF THE INVENTION

Electro-optical displays are well known in the art. Such displays typically feature an electro-optical material contained within a cavity between two plates of the display of which either one or both plates are made from a transparent material such as glass or quartz. The electro-optical material is generally of the class of materials whose ability to block or transmit light is dependent upon the direction in which light impinges upon its molecular structure with its ability to transmit or block light dependent upon whether it is an electrically energized or an electrically un-energized state whereby it is able to re-orient the direction of its molecular structure with respect to the direction of the incident light. The means by which the electro-optical material is electrically energized is commonly provided by coating the inside surface of the plates adjacent the electro-optical material with a transparent electrically conductive material such as tin oxide or indium oxide. The images transmitted to a viewer of the display are provided by forming the conductive coating into one or more discrete segments on at least one of the plates so that only the electro-optical material between the segment and the coating on the opposite plate is electrically energized when electrical power is connected to the particular segment.

Electro-optical materials suitable for use in electro-optical displays are well known to those ordinarily skilled in the art and have been the object of considerable study and development for many years. Generally, they comprise a unique class of organic materials having a crystalline structure which is able to be rotated or otherwise re-oriented by an electric field and, as a result of such re-orientation, effect the amount of light that is able to be transmitted through the material. Electro-optical materials in common use today are generally known as "liquid crystalline" materials. Liquid crystalline materials are classified according to their organic structure into smectic, chlosteric and nematic type materials. Generally, smectic type liquid crystals feature a parallel layered dispersion of the organic crystalline structure in an amorphic organic fluid medium whereas the chlosteric type features an organic crystalline structure that is in the form of coils and the nematic type features a uniformly disposed organic crystalline structure within an amorphic organic medium.

Most commonly used today for electro-optical displays are nematic type liquid crystals whose polarity can be controlled by means of the location and type of chemical groups that are attached to the organic crystalline structure. By controlling polarity, nematic liquid crystalline materials have developed into those having positive dielectric anistrophy and those having negative dielectric anistrophy. Those having positive dielectric anistrophy tend to align parallel to the direction of an electric field and those having negative dielectric anistrophy tend to align at $90^{\circ}$ to the direction of an electric field imposed across the material. Although nematic liquid crystalline materials having positive dielectric anistrophy are most popular today for use in electro-optical displays, the invention comtemplates the use of any

- 4 -

suitable electro-optical material or mixtures of such materials with or without additional materials such as dichroic organic dyes, colorants and homologous non-liquid crystalline materials and the like.

The optical properties of electro-optical materials of the type hereinbefore described are however sensitive to variations in the distance between the plates of the display and may exhibit undesirable refraction patterns in areas within the display cavity where the distance is the least. Varying thickness of the electro-optical material display cavity is generally indicative of the inability to maintain absolute parallelism between the plates which becomes even more acute as the area of the cavity increases for larger displays.

Thus there exists a problem, particularly in larger optical displays, in maintaining sufficient parallelism between the plates to minimize or eliminate refraction patterns arising from variations in thickness of the electro-optical material across the display cavity. In an attempt at improving parallelism between the display plates, it has been common practice in the past to mix solid compatible materials such as glass beads or fibers with the electro-optical material. Such practice however has not been altogether successful for such materials are susceptable to migration within the display cavity and thus cannot always assure a fixed uniform distance between the display plates across the cavity. Although some consideration has been given in the past to providing a support within the cavity between the plates of an electro-optical display, such as in the form of a singular glass or fluorocarbon-organosilane dispersion bead as disclosed in United States Patent 3,990,781, up until the time of the present invention, such members were solely for support and no one had thought to provide a plurality of graphically shaped members that not only provide support and improve and maintain parallelism between the plates but in combination would also transmit information to a viewer of the display regardless of whether the electro-optical material contained within the display's cavity was in a electrically energized or electrically un-energized state. The ability of an electro-optical display to impart information to a viewer of the display regardless of whether the electro-optical material is in an electrically energized or· electrically un-energized state is extremely useful for such information can be used to continuously complement the information otherwise provided by the display by highlighting with reference bars, enclosing brackets, words, letters, numbers, symbols and the like and thus vastly increase the effectiveness and impact of the total information conveyed to a viewer of the display.

In contrast to past art, the electro-optical display of the present invention not only provides improved optical uniformity but also contributes substantially to the manner in which informative information is imparted to a viewer of the display by providing information in the form of optical images that is a combination of optical images formed by a combination of support members within the display's cavity that convey information independently of whether the optical material is electrically energized or not and optical images provided by the electro-optical material itself that is dependent upon whether the electro-optical material is in an electrically energized or an electrically un-energized state.

## SUMMARY OF THE INVENTION

Accordingly, it is an object of this invention to provide an electro-optical display having a layer of electro-optical material contained within a cavity between two plates of the display having improved optical uniformity imparted thereto by a plurality of graphically shaped support members disposed within the display cavity that minimize or eliminate variations in the thickness of the layer across the cavity by providing support and improving parallelism between the plates.

It is another object of this invention to provide an electro-optical display having a layer of electro-optical material contained within a cavity between two plates of the display having improved optical uniformity imparted thereto by a plurality of graphically shaped support members disposed in the

0077152

- 7 -

display cavity that provide support and improve parallelism between the plates and that in combination impart information to a viewer of the display regardless of whether the electro-optical material is in an electrically energized or an electrically un-energized state.

It is a feature of this invention to provide an electro-optical display having a layer of electro-optical material contained within a cavity between two plates of the display having improved optical uniformity provided by a plurality of graphically shaped support members disposed in the display cavity that provide support and improve parallelism between the plates to minimize or eliminate undesirable refraction patterns arising from variations in the thickness of the layer of electro-optical material and that in combination transfer information to a viewer of the display regardless of whether the electro-optical material is in an electrically energized or an electrically un-energized state.

BRIEF DESCRIPTION OF THE DRAWINGS

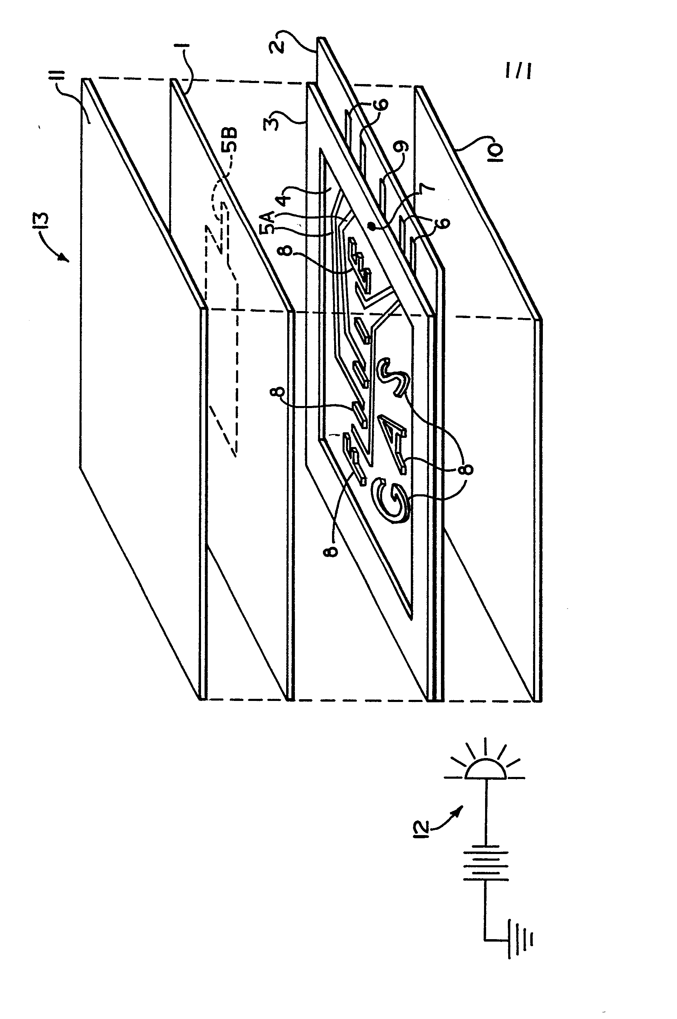

The FIGURE shows an exploded perspective view of an embodiment of the optical display of the invention.

- 8 -

DETAILED DESCRIPTION OF PREFERRED EMBODIMENTS

An embodiment of electro-optical display 13 of the invention is shown in the FIGURE. Display 13 has transparent front plate 1 and transparent back plate 2. Plates 1 and 2 are preferably made from glass but may be made from any suitable transparent non-conductive material such as quartz and the like that will not contaminate the electro-optical material of the display. Plates 1 and 2 possess suitable rigidity, temperature resistance and other properties as are required for the particular application in which display 13 is to be used. Seal 3 is disposed between plates 1 and 2 for the purpose of hermetically bonding plate 1 to plate 2 when they are pressed together. Seal 3 is shaped to provide cavity 4 within its inner perimeter when plates 1 and 2 are pressed together. Cavity 4 is adapted to contain an electro-optical material, such as hereinbefore described, having an ability to transmit light dependent upon whether the material is in an electrically energized state or an electrically un-energized state. Plates 1 and 2 have transparent electrically conductive coatings 5B and 5A in the form of discrete images respectively disposed on their facing surfaces. Coating 5A extends past seal 3 from cavity 4 in the form of leads 6 for connecting coating 5A to a source of electrical power. Plate 2 is sufficiently wider than plate 1 to provide support and adequate exposure outside of cavity 4 for connection of leads 6 to a source of electrical power. Coatings 5A and 5B are preferably made from indium oxide or tin oxide and are preferably disposed upon plates 1 and 2 for example by silk screening or other suitable technique with the desired patterns provided by etching away the undesired portion of coatings 5A and 5B by hydroflouric acid or other suitable etching material.

Seal 3 is commonly in the order of about several microns to about 100 microns in thickness and has a width sufficient to suitably support and bond plates 1 and 2 together and contain the electro-optical material disposed within cavity 4. Although other suitable methods may be used, electrical power is preferably transmitted from plate 2 to conductive coating 5B on plate 1 by means of electrically conductive plug 7 which extends through seal 3 from plate 2 and contacts coating 5B when plates 1 and 2 are pressed together. Plug 7 is made from silver or other highly conductive material and is connected to a source of electrical power by means of a conductive coating on plate 2 in the form of lead 9 which may be made of the same material as coatings 5A and 5B.

In the event that it is desired that display 13 be a reflective type display, then a reflector 10 made from a suitably reflective material well known to those skilled in the art may be disposed on the side of plate 2 facing away from cavity 4 such that it is able to reflect light entering into cavity 4 through plate 1 back through the electro-optical material contained in cavity 4. In the alternative, where desired, plate 2 may itself be in the form of a reflector rather than being transparent. Dependent upon the particular electro-optical material contained in cavity 4, a polarizer film such as film 11 may be disposed on the side of plate 1 facing away from cavity 4. Although not shown in the FIGURE, a polarizer film may be disposed between plate 2 and relfector 10 where such is desirable for a particular display. The use of such polarizers are well known to those skilled in the art and are commonly used for example when the electro-optical material is a nematic liquid crystal having positive dielectric anistrophy and even more commonly where the inner surfaces of plates 1 and 2 are coated with a suitable compatible surfactant material and rubbed to produce substantially alligned parallel lines that when rotated with respect to each other produce a twist in the nematic liquid crystal. It is to be understood therefor that optical displays made in accordance with the inventions include one or more aligned or crossed polarizers, reflectors, the hereinbefore described rubbed coatings and other suitable components where such are desired for a particular application.

Disposed in cavity 4 are a plurality of graphically shaped support members 8 in the form of the referenced bars, the letters "F", "E" and the word "GAS". In this case the referenced bars, although retangular in shape, are considered graphically shaped for when taken in combination with the letters "F", "E" and the word "GAS" they provide information to a viewer of the display regardless of whether the electro-optical material is in an electrically energized or an electrically un-energized state. It is to be understood that displays made in accordance with the invention may include other support members where desired that are only support members and are not intended to convey information to a viewer of the display. Support members 8 are substantially the same thickness as seal 3 so that they contact plates 1 and 2 when plates 1 and 2 are pressed together. Although support members 8 and seal 3 may be disposed on plate 2 by any suitable manner, they are preferably disposed onto plate 2 by the previously described silk screening-etching technique well known by those ordinarily skilled in the art. Alternatively, where desired, seal 3 and support members 8 may be disposed on the facing surfaces of both plates 1 and 2 with appropriate adjustments to their thickness such that when plates 1 and 2 are pressed together the desired thickness of cavity 4 is achieved.

The particular array of support members 8 shown in the FIGURE includes the letter "A" which has an internal open area in its upper portion. In instances where at least one of the support members 8 have at least one open but enclosed area, it is desirable that the electro-optical material be disposed within the open area so as to preclude the presence of any voids within cavity 4. In such instances, where permitted by the type of materials from which Seal 3 and support members 8 are made, the open areas within support members 8 can be easily filled where, after initially pressing plates 1 and 2 together with seal 3 and support members 8 therebetween, plates 1 and 2 can be pried apart sufficiently to pour the electro-optical material into cavity 4 and then re-pressing plates 1 and 2 together to finally effect the bond therebetween. In cases where there are no open but enclosed areas associated with the graphically shaped support members, the cavity can be filled by the conventional practice of injecting the electro-optical material through the seal after the plates have been pressed and bonded together by the seal if such is the preferred practice for the particular type of sealant material selected.

Support members 8 are made from a transparent, non-conductive material that may include a colorant where such is desired for a particular effect or may include different colorants amongst the separate support members where such is desired. The word "transparent" as used herein is not restricted to absolute transparency but may range from transparent to opaque with the only optical limitation imposed thereon that support members 8 are able in combination to convey information to a viewer of display 13 whether or not the electro-optical material contained in cavity 4 is in an electrically energized or an electrically un-energized state.

Although support members 8 and seal 3 may be made from different materials, they are preferably made from the same material.  The material from which support members 8 are made must be compatible with and not contaminate the electro-optical material contained in cavity 4 and preferably aid in bonding plates 1 and 2 together in addition to possessing sufficient rigidity to provide support and maintain parallelism between plates 1 and 2 across cavity 4 as well as having the ability to transmit information to a viewer of the display whether or not the electro-optical material is in an electrically energized or electrically un-energized state.  Although support members 8 may be made from a high melting temperature material such as glass, they are preferably made from a material that permits them to be disposed in cavity 4 at a temperature of from about $25^\circ$C to about $150^\circ$C.

A material found to be of particular advantage for use in making support members 8 is a composition comprising a blend of a thermoplastic phenoxy polymer and at least one epoxy resin that preferably contains an amount of crosslinking agent suitable to convert the blend to a thermoset material at temperatures low enough so as not to damage any components of display 13 that are present during the curing process.  The use of such blend as a thermoplastic material for an optical display sealant is disclosed in United States Patent 3,994,568, the disclosure of which is incorporated herein by reference, which, when crosslinked by the addition of a suitable amount of a crosslinking agent such as ethyl methyl imidizole and heat cured, is able to provide support members 8 with the amount of rigidity and optical properties required in addition to having the ability to bond plates 1 and 2 together in conjunction with Seal 3.

The above composition has been found to cure in about 10 minutes at temperatures at or about $200^{\circ}C$ and is readily adaptable for silk screening onto plate 2 or on plates 1 and 2 as hereinbefore described. The above composition, when suitable crosslinked, has been found to be particularly resistant to water vapor penetration and, when used to make both support members 8 and seal 3, is able to provide a combination that permits plates 1 and 2 to be pried apart prior to curing for pouring the electro-optical material into cavity 4 as previously described.

Although not required, optical display 13 of the invention may also include an illumination means 12 for illuminating the side of plate 2 facing away from cavity 4 that is furthest away from a viewer of display 13. Although any suitable means may be used for illumination, the illumination is preferably provided by a source of light provided by a suitably sized light emitting diode as shown schematically in the FIGURE.

0077152

- 15 -

A particularly striking effect is provided by a transmissive type display 13 utilizing a nematic liquid crystalline material having positive dielectric anistrophy and having aligned polarizers on the side of plates 1 and 2 facing away from each other as previously described. Under such conditions, support members 8 will be light with the balance of the display being dark when the nematic liquid crystal is an electrically un-energized state. A striking effect is also produced for displays 13 utilizing a nematic liquid crystal having positive dielectric anistrophy and a reflector plate, such as previously described reflector 10, is disposed on the side of plate 2 facing away from cavity 4 in conjunction with polarizers in the sides of plates 1 and 2 facing away from cavity 4 having their alignments crossed at $90^{\circ}$. In such case, support members 8 will be dark and the balance of the display will appear light when the nematic liquid crystalline material is in an electrically un-energized state.

In the embodiment shown in the FIGURE, portions of conductive coating 5A extend between support members 8. Conductive coating 5B is aligned such that, when electrically energized in conjunction with coating 5A, an electrical gradient exists between coating 5B and only those portions of coating 5A that extend between support members 8 as shown in the FIGURE. Thus a viewer of display 13 will at all times be able to see the word "GAS" and the letters "F" and "E" and the referenced bars whether or not the electro-optical material is electrically energized and, upon proper sequential interconnections betwen leads 6 and a means of measuring depth in the reservoir of gas to which display 13 is electrically connected, each portion of coating 5A between the respective support members 8 will be sequentially electrically energized as as to provide the viewer with an optical image in the shape of the portions of coating 5A that extend between the bars as the level of gas lowers in the reservoir.

WHAT IS CLAIMED IS:

1. An electro-optical display (13) comprising;

a pair of plates (1, 2), of which at least one plate is transparent, said plates bonded together by means of a seal (31) made from a hermetic sealant composition,

a cavity (41) disposed between the plates and enclosed by the seal,

an electrically conductive coating (5A, 5B) disposed on the side of each of the plates adjacent the cavity, said coating disposed on at least one of the plates in the form of at least one discrete image, and said coatings adapted such that each is able to be connected to a source of electrical power outside of the cavity,

an electro-optical material disposed within the cavity, said material having an ability to convey information to a viewer of the display that is dependent upon whether the electro-optical material is in an electrically energized or an electrically un-energized state imparted thereto by the conductive coatings, and a plurality of graphically shaped support members (81) disposed within the cavity made from a composition that is compatible with the electro-optical material, said support members adapted to provide support and improve parallelism between the plates across the cavity in conjunction with having the ability in combination to convey information to a viewer of the display regardless of whether the electro-optical material is in the electrically energized or electrically un-energized state.

2. The display of Claim 1 wherein both of the plates are transparent.

3. The display of Claims 1 or 2 including ploarizer means (11) disposed on at least one of the plates.

4. The display of Claim 2 including a reflector (10) disposed on the side of one of the plates facing away from the cavity, said reflector adapted to reflect light back into the cavity that has entered into the cavity through the other transparent plate.

5. The display of Claim 1 wherein the electro-optical material is a liquid crystalline material.

6. The display of Claim 1 wherein the electro-optical material comprises a blend of at least one liquid crystalline material with at least one homologous non-liquid crystalline material.

7. The display of Claim 5 or 6 wherein the liquid crystalline material is a nematic material having positive dielectric anistrophy.

8. The display of Claim 5 or 6 wherein the liquid crystalline material is a nematic material having negative dielectric anistrophy.

9. The display of Claim 1 including at least one dichroic dye blended into the electro-optical material.

10. The display of Claim 1 wherein the support members composition is the same as the sealant composition.

11. The display of Claim 1 wherein the support members are made from a composition that enables them to be disposed within the cavity at a temperature of from about 25°C to about 150°C.

12. The display of Claim 1 wherein the sealant composition comprises the thermoset product of a thermoplastic phenoxy polymer and at least one epoxy resin and a cross-linking agent.

13. The display of Claim 12 wherein said crosslinking agent is ethyl methyl imidizole.

14. The display of Claim 10 wherein both the support member composition and the sealant composition comprise the crosslinked product of a blend of a thermoplastic phenoxy polymer and at least one epoxy resin and a crosslinking agent.

15. The display of Claim 14 wherein the crosslinking agent is ethyl methyl imidizole.

16. The display of Claim 1 wherein the support members are made from a composition comprising the thermoplastic product of a thermoplastic phenoxy and at least one epoxy resin.

17. The display of Claim 1 wherein the support members are made from a. composition that includes a colorant.

18. The display of Claim 17 wherein at least one of the support members is made from a composition that includes a different colorant than the colorant used in the other support members.

19. The display of Claim 1 including a rubbed coating adjacent the electro-optical material having substantially parallel marking lines disposed on the side of each of said plates facing towards the cavity.

20.    The display of Claim 19 wherein the rubbing lines on one of the plates is rotated from the rubbing lines on the other plate such that rotated rubbing lines impart a twist to the electro-optical material contained between the plates.

21.    The display of Claim 1 including means for illuminating the side of the plate that is furthest from and faces away from a viewer of the display.

22.    The display of Claim 1 wherein one of the plates is a reflector that is adapted to reflect light back into the cavity that has entered into the cavity through the other transparent plate.

23.    The display of Claim 1 wherein the support members aid in bonding the plates together.

24.    The display of Claim 1 including at least one support member disposed in the cavity that provides support and improves parallelism between the plates and which does not convey information to a viewer of the display regardless of whether then electro-optical material in in an electrically energized or electrical un-energized state.

## DOCUMENTS CONSIDERED TO BE RELEVANT

| Category | Citation of document with indication, where appropriate, of relevant passages | Relevant to claim |
|---|---|---|
| X | US - A - 4 116 544 (R.A. SOREF)<br>* column 1, line 64 to column 2, line 32 *<br>-- | 2-7, 9,22 |
| P,A | EP - A1 - 0 050 357 (HITACHI LTD.)<br>* page 2, line 19 to page 3, line 12 *<br>-- | 1,2, 5,16, 19,23 |
| A | GB - A - 1 487 890 (RANK ORGANISATION LTD.)<br>* page 1, lines 19 to 37 *<br>-- | 1,2, 5,12 |
| A | GB - A - 2 049 973 (BBC BROWN BOVERI & CO. LTD.)<br>* whole document *<br>---- | 1,2, 5,12 |

**CLASSIFICATION OF THE APPLICATION (Int. Cl. 3)**

G 02 F    1/133

**TECHNICAL FIELDS SEARCHED (Int.Cl. 3)**

G 02 F    1/01
G 02 F    1/13
G 02 F    1/133
G 09 F    9/00
G 09 F    9/30
G 09 F    9/35

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family,
corresponding document

The present search report has been drawn up for all claims

| Place of search | Date of completion of the search | Examiner |
|---|---|---|
| Berlin | 13-12-1982 | BOTTERILL |